# EUROPEAN PATENT APPLICATION

(11) **EP 2 770 671 A1**
(43) Date of publication of application: **27.08.2014**
(21) Application number: 13305218.3
(22) Date of filing: 26.02.2013
(51) Int. Cl.: H04L 12/26, H04L 12/841, G06F 17/30, H04L 29/06

(54) **Method and device of measurement of a connection latency**

(71) Applicant: Thomson Licensing, 92130 Issy-les-Moulineaux (FR)
(72) Inventor: Chandrashekar, Jaideep, 92443 Issy-les-Moulineaux (FR); Gangam, Sriharsha, West Lafayette IN 47906 (US); Kurose, Jim, Amherst MA 01003 (US); Cunha, Italo, 31270-010 Belo Horizonte, MG (BR)
(74) Representative: Huchet, Anne

(57) **Abstract**

Method of measurement of a connection (16) latency at a measurement point, comprising the steps of:
a) dividing a window of time into a number n of successive discrete time intervals lᵢ, 0 ≤ *i* ≤ *n* - 1;
b) associating to each time interval a data structure ;
c) storing in at least one data structure CBFᵢ an entry representative of a data packet arrived at the measurement point at a time corresponding to the temporal position of the time interval lᵢ associated to said data structure CBFᵢ; and
d) when an acknowledgement packet corresponding to said data packet arrives at the measurement point, identifying said time interval lᵢ associated to said data structure CBFᵢ in which the entry is stored and computing the connection latency on the basis of the identified interval.

## Description

### FIELD OF THE INVENTION

The present invention deals with the measurement of the latency of transmission between two terminals in a network. More particularly, the invention concerns transmissions using a protocol of the type ARQ (Automatic Request and Response), such as TCP (Transmission Control Protocol).

Thus, the invention concerns a method and a device of measurement of a connection latency. It also concerns a computer program implementing the method of the invention.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

TCP is a fundamental protocol of the Internet architecture. One of its main tasks is to manage the reliable transmission of data packets within a data transmission network.

Latency is a key determinant in the performance of a TCP network flow and large values can adversely affect bulk transfers, increase buffering, and make interactive sessions unresponsive. Thus, tracking flow latency is a critical tool in monitoring the performance of TCP based applications. While estimating this latency is an intrinsic part of TCP and thus trivial at the endpoint terminals of a connection, it is extremely challenging in the middle of the network, i.e., at a network node on the path connecting the end-points. At the same time, the ability to infer the flow latency at such locations would be extremely valuable to users and network operators.

For example, let us consider a typical WiFi enabled home network with DSL (Digital Subscriber Line) broadband connectivity. Today, when applications underperform or when latencies to destinations are larger than usual, it is extremely difficult to identify where the bottleneck is. Is the increased latency occurring inside the wireless network? Or is the server slow to respond?

This area has attracted a lot of attention in the past and several methods have been proposed, which can estimate the latency merely by observing the traffic passively and do not require any interference with the traffic being monitored.

According to an existing passive method, a single RTT (Round Trip Time) estimate can be obtained by matching SYNs (SYNchronization requests) and ACKs (ACKnowledgements) in the beginning of a TCP connection. However, this passive method has limited utility since latency can change considerably over the connection duration.

Another passive method infers the RTT by computing the delay between the transmission of two consecutive congestion windows.

According to another passive method described in Jaiswal, G.lannaccone, C. Diot, J. Kurose, and D. Towsley : "Inferring TCP connection characteristics through passive measurements", Proc. IEEE INFOCOM, 2004, a TCP state machine is emulated offline, using passively recorded traces, to infer the RTT estimates.

Some of these prior art methods can track latency over the duration of the connection, and also in the middle of the network. However, they are not scalable and are not designed to run in real-time.

Diagnosing connection performance and responding to degradations in an agile manner necessitates carrying out the latency estimation in real-time, i.e. at the same time as when the connection is active. However, doing so accurately is very challenging since it requires to track extensive amounts of TCP state information. This makes the prior art methods infeasible on network processing nodes that must process large volumes of traffic, such as backbone routers in the Internet, or that are constrained in terms of compute and memory resources, such as home network DSL and cable gateways.

### SUMMARY OF THE INVENTION

The present invention proposes a solution for improving the situation.

Accordingly, the present invention provides a method of measurement of a connection latency at a measurement point, comprising the steps of:
a) dividing a window of time into a number n of successive discrete time intervals Iᵢ, 0 ≤ *i* ≤ *n* - 1;
b) associating to each time interval a data structure ;
c) storing in at least one data structure CBFᵢ an entry representative of a data packet arrived at the measurement point at a time corresponding to the temporal position of the time interval Iᵢ associated to said data structure CBFᵢ; and
d) when an acknowledgement packet corresponding to said data packet arrives at the measurement point, identifying said time interval Iᵢ associated to said data structure CBFᵢ in which the entry is stored and computing the connection latency on the basis of the identified interval.

The present invention relies on the fact that acknowledgement packets are sent back in the opposite direction of the transmission of data packets, said acknowledgement packets containing some information that can be used to associate them with said data packets. Thus, the invention is advantageously applicable to ARQ protocols, such as TCP, wherein such acknowledgements are provided.

By keeping a fixed number of time intervals and storing only summarized entries representative of the arriving data packets at the measurement point, the method of the present invention permits an approximate latency estimation using a fixed amount of memory.

The discrete time intervals can be of equal or different sizes. The only requirement is that each interval covers a period of time that does not overlap with another interval.

Besides, the interval associated to the data structure in which the entry is stored is identified as a result of a search through a fixed number of intervals. Thus, the amount of time taken by the method of the present invention is limited and bounded by the number of intervals used.

The latency computed according to the present invention is only an approximate as there is an explicit time discretization error involved in the computation. However, this is not an issue in most applications, particularly those that focus on troubleshooting or performance diagnosis. Indeed, these applications are generally interested in tracking whether latencies are within some desired range or if they have exceeded a threshold. Such applications can tolerate approximate answers and errors, as, for example, the applications that monitor the quality of experience of VoIP traffic by checking in real-time that the observed latencies do not exceed 150ms. Such latency thresholds are also associated with other applications: 100ms for online person shooter and racing games, and for video streaming applications. In such applications, tracking approximate latencies is good enough.

Preferably, the data structures are Counting Bloom filters.

A Bloom filter is a space-efficient probabilistic data structure that is used to test whether an element is a member of a set. Counting Bloom filters, as used in the preferred embodiment of the invention, support item deletions from a given set.

According to a first embodiment, the discrete time intervals have the same width.

This first embodiment is particularly interesting for the measurement of high latencies.

According to a second embodiment, the discrete time intervals have a width increasing from the most recent time interval I₀ to the oldest time interval Iₙ₋₁.

This second embodiment is particularly interesting for the measurement of small latencies. Besides, it enables a very parsimonious use of memory.

Advantageously, each time interval in the time window has a width twice of the time interval immediately following it.

This choice permits an easy implementation and a good computational efficiency.

Advantageously, the computed latency represents a round trip time between the measurement point and a connection endpoint terminal to which the data packet is transmitted.

Advantageously, the method further comprises the step of storing, at time t=0 corresponding to the arrival of the data packet at the measurement point, the entry representative of said data packet in a temporary data structure.

This entry is then shifted from the temporary data structure to the first data structure CBF₀ associated to the first interval I₀. After a time corresponding to the width of the first interval I₀, the entry is shifted to the second data structure CBF₁ associated to the second interval I₁ and so on, until the reception of the acknowledgement packet. Thus, the interval I₁ associated to the data structure CBFᵢ where the entry is stored at the time of reception of the acknowledgement packet constitutes an indication of the time of arrival of the data packet at the measurement point.

The invention further provides a device of measurement of a connection latency, comprising :
a) a dividing module for dividing a window of time into a number n of successive discrete time intervals Iᵢ, 0 ≤ *i* ≤ *n* - 1, and for associating to each time interval a data structure;
b) a storage module for storing, in at least one data structure CBFᵢ an entry representative of a data packet arrived at the measurement point at a time corresponding to the temporal position of the time interval Iᵢ associated to said data structure CBFᵢ; and
c) a computation module for, when an acknowledgement packet corresponding to said data packet arrives at the device, identifying said time interval Iᵢ associated to said data structure CBFᵢ in which the entry is stored and computing the connection latency on the basis of the identified interval.

According to an embodiment, the device is a packet processing device, particularly a router or a home gateway.

According to another embodiment, the device is an eavesdropping device.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

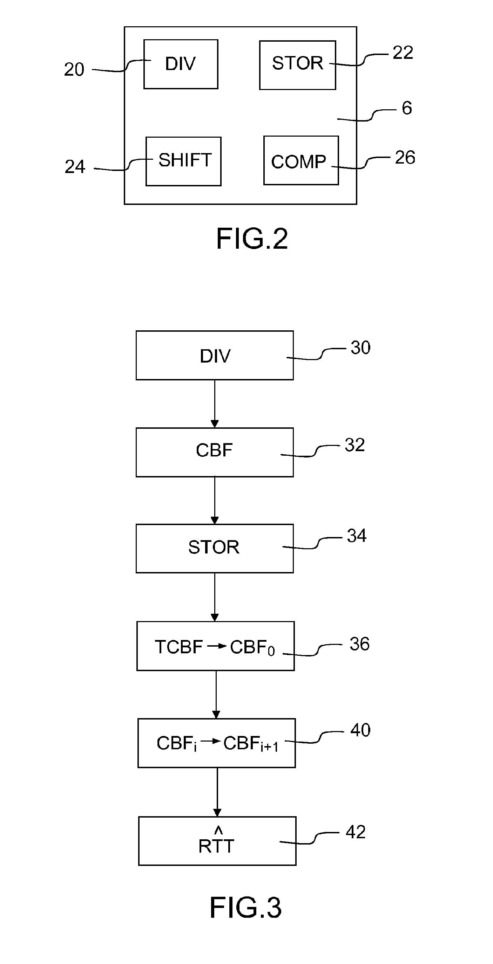

The invention thus provides a computer-readable program comprising computer-executable instructions to enable a computer to perform the method of the invention. The diagram of figure 3 illustrates an example of the general algorithm for such computer program.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 is a schematic view of a network wherein the method of the present invention is advantageously implemented ;
- Figure 2 is a schematic view of a device of measurement according to an embodiment of the present invention;
- Figure 3 is a flowchart detailing the steps of the method of measurement of the present invention;
- Figure 4 is a schematic view of the data structures implemented according to a first embodiment of the present invention; and
- Figure 5 is a schematic view of the data structures implemented according to a second embodiment of the present invention.

### DETAILED DESCRIPTION OF PREFERRED EMBODIMENTS

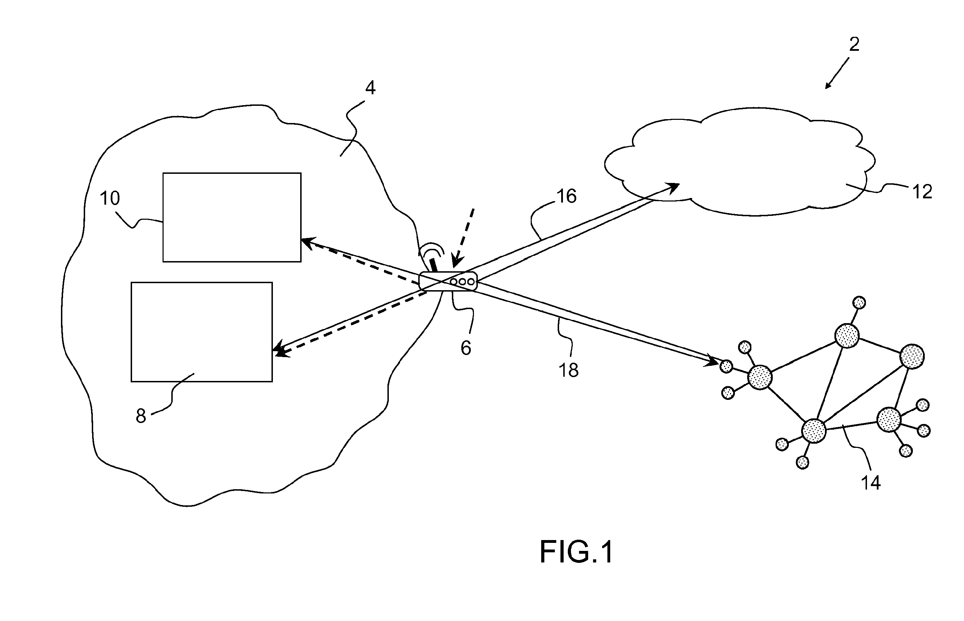

Referring to Figure 1, there is shown therein a schematic view of a network 2 connecting devices communicating using an ARQ type protocol, such as the TCP protocol.

For clarity, the network 2 comprises a home network 4 connected to the global network 2 through a home gateway 6.

The home network 4 comprises first and second user terminals 8, 10, such as, for example, a laptop, a desktop, a connected TV, a telephone, a tablet.

According to an exemplary scenario, a first user of the home network 4 is watching, on the first terminal 8, a movie provided by a video streaming server 12 while a second user of the home network 4 is using the second terminal 10 for carrying an IP call with another terminal within a VoIP (Voice over IP) network 14.

In this scenario, two connections coexist simultaneously, a first connection 16 between the first terminal 8 and the video server 12 and a second connection 18 between the second terminal 10 and the VoIP network 14. In this situation, if there is a high latency on the first connection 16, the video displayed on the first terminal 8 will have a large buffer period. Similarly, if there is a high latency on the second connection 18, the IP call will suffer.

In order for the users to understand the source of the connection problems that they experience, the home gateway 6, according to the invention, is able to measure the latencies of both connections 16, 18 independently, within a limited amount of time.

Figure 2 details the components of the home gateway 6 permitting these measurements of latencies.

The home gateway 6 comprises a dividing module 20 able to divide a window of time on a number of successive non-overlapping discrete time intervals having a same width or different widths.

The home gateway 6 also comprises a storage module 22 able to store data related to the connections 16, 18 in data structures, more particularly in Counting Bloom filters, noted CBF in this description.

Furthermore, the home gateway 6 comprises a shifting module 24 able to shift stored data in the storage module 22 from one CBF to another CBF.

Besides, the home gateway 6 comprises a computation module 26 for computing the latency of each connection 16, 18 on the basis of the data stored in the CBFs.

The flowchart of Figure 3 details the steps of the method of measurement of the latencies implemented by the home gateway 6.

For instance, the following description relates to the measurement of the latency of the connection 16 between the first terminal 8 and the video streaming server 12.

At step 30, the dividing module 20 divides a window of time [t=-W,t=0], in which W is a positive time, into a fixed number n of successive discrete time intervals ordered from a first time interval I₀=[-w, 0], in which w is a positive time smaller than W, to an n^{th} time interval Iₙ₋₁ starting at time t=-W. Thus, I₀ is the most recent time interval while Iₙ₋₁ is the oldest time interval.

Advantageously, the time W is selected to be large enough to cover worst case values for round trip latency over the network 2.

For example, considering that the VoIP service can tolerate latencies of around 150 ms beyond which the quality degrades, W can be set between 1.5 to 2 times this value, i.e. between 225 and 300 ms. This will ensure that the home gateway 6 will detect all the delays that might adversely affect the quality of the service.

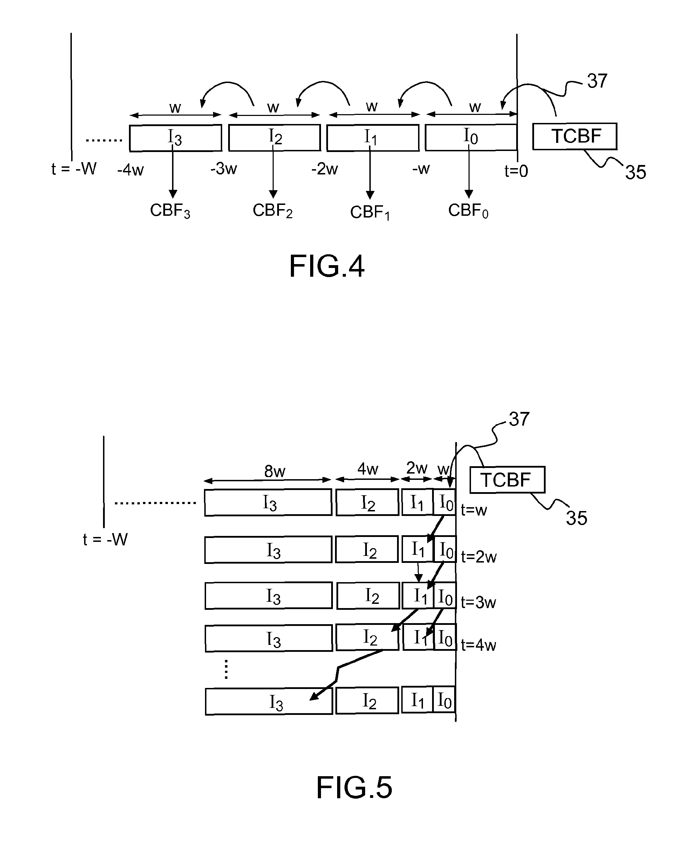

According to a first embodiment represented in Figure 4, the discrete time intervals have the same width w=W/n.

According to a second embodiment represented in Figure 5, the discrete time intervals have a width increasing exponentially from the first time interval to the n^{th} time interval. Preferably, as represented in Figure 5, each time interval in the time window [-W,0] has a width twice of the time interval immediately following it in time, i.e. Iᵢ has a width twice of the width of Iᵢ₋₁.

At step 32, the home gateway 6 associates to each time interval Iᵢ a Counting Bloom filter CBFᵢ.

For instance, in Figure 4, the CBF associated to the first time interval I₀ is CBF0, the CBF associated to the second time interval I₁ is CBF1, etc.

At step 34, at time t = 0 corresponding to the arrival of a data packet at the home gateway 6, the storing module 22 stores an entry representative of said data packet in a temporary CBF 35.

For instance, let's consider a scenario in which said data packet is part of a data flow identified as f and comprises a plurality of bytes, the last of them containing a sequence number equal to X, that arrives at the measurement point. The stored entry in the temporary CBF at step 34 is the concatenated string f+(X+1), where X+1 is the expected acknowledgement that will be received in the opposite direction according to the TCP protocol.

At time t=w, the shifting module 24 shifts said entry from the temporary CBF 35 to the first Counting Bloom filter CBF₀ associated to the first time interval I₀, as represented by the arrow 37 in Figures 4 and 5.

Then, at step 40, the shifting module 24 erases the content of the last counting Bloom filter CBFₙ₋₁ and shifts the contents of the remaining Counting Bloom filters CBF₀,..., CBFₙ₋₂ to the left. Thus, CBFₙ₋₁ takes on the contents of CBFₙ₋₂, CBFₙ₋₂ takes on the contents of CBFₙ₋₃ and so on.

According to the first embodiment represented in Figure 4, if the data packet is received exactly at t=0, then after w seconds, the corresponding entry will be stored in CBF₀; after 2w seconds it will be moved to CBF₁; then to CBF₂ after 3w seconds and so on. After W=n*w seconds, the data packet will be lost because it is not contained in any of the CBFs being maintained.

According to the second embodiment represented in Figure 5, if the data packet is received exactly at t=0, then after w seconds, the corresponding entry will be stored in CBF₀; after 2w seconds it will be moved to CBF₁; after 3w seconds, it is still in CBF1, as the length of the second time interval I₁ is twice the length of the first interval; after 4w seconds, the entry will be moved to CBF₂, and so on, i.e. the content of the CBFᵢ is moved to CBFᵢ₊₁ every 2ⁱw seconds. After W seconds, the data packet will be lost because it is not contained in any of the CBFs being maintained.

When an acknowledgement packet corresponding to said data packet arrives at the home gateway 6, the computation module 26 identifies, at step 42, the CBF in which the corresponding entry of the data packet is stored and computes latency on the basis of the interval to which the identified CBF is associated.

For example, considering the previous scenario in which the stored entry is the concatenated string f+(X+1), and assuming that the acknowledgement number is Y, the computation module 26 computes the concatenated string f+Y and checks for this entry in each of the Counting Bloom filters CBF₀, CBF₁,...,CBFₙ₋₁.

This search among the Counting Bloom filters may be done in a sequential order by checking the CBFs one after the other. This search can be also done simultaneously over all the CBFs and then identifying the searched CBF as the CBF having the entry and with the smallest index.

If j is the smallest index of the CBF that contains the entry, then the computation module 26 computes the round trip time between the home gateway 6 and the host, i.e. the terminal 8 or the video streaming server 12, that the acknowledgement came from to be j*w+w/2, in the case of the first embodiment. Thus, only a single RTT estimate is carried, based on matching the data packet with the corresponding acknowledgement.

If there is no CBF containing the entry, the method does not return any value of latency. However, in practice, such situation should not be frequent is the window of time width W is chosen large enough to cover round trip time worst cases. If necessary, this width W may be increased by increasing the amount of memory of the storage module 22.

Furthermore, it is possible, for example according to TCP, that there is no acknowledgement for each data packet but only an acknowledgment for several data packets batched together. The method of the present invention is still applicable and provides as many latency estimates as the number of acknowledgements sent as these acknowledgements can be unambiguously associated with data packets.

By measuring, according to the present invention, the latencies of both TCP connections 16 and 18 independently and then correlating them with each other, it is possible, for the home gateway 6, to provide to the users an explanation of the underlying problems of connection affecting the terminals 8 and 10. In particular, if it appears that only wireless connections are suffering from longer latencies, then it may be concluded that the network problems being experienced are related to the quality of the wireless network. On the other hand, if only some of the wireless connections have a longer latency, then the problems are unlikely related to the wireless network and are more related to the terminal user itself, or perhaps to an Internet server.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

A person skilled in the art will readily appreciate that various parameters disclosed in the description may be modified and that various embodiments disclosed and/or claimed may be combined without departing from the scope of the invention.

For instance, while in the described embodiment, the measurement device is located in the middle of the connection, i.e. the home gateway, it may advantageously be an end equipment, for example a user terminal or an internet server.

## Claims

1. Method of measurement of a connection (16) latency at a measurement point, comprising the steps of:
a) dividing (30) a window of time into a number n of successive discrete time intervals Iᵢ, 0 ≤ *i* ≤ *n* - 1;
b) associating (32) to each time interval a data structure ;
c) storing (34, 36, 40) in at least one data structure CBFᵢ an entry representative of a data packet arrived at the measurement point at a time corresponding to the temporal position of the time interval Iᵢ associated to said data structure CBFᵢ; and
d) when an acknowledgement packet corresponding to said data packet arrives at the measurement point, identifying (42) said time interval Iᵢ associated to said data structure CBFᵢ in which the entry is stored and computing (42) the connection latency on the basis of the identified interval.

2. Method of claim 1, wherein the data structures are Counting Bloom filters.

3. Method of claim 1 or 2, wherein the discrete time intervals have the same width.

4. Method of claim 1 or 2, wherein the discrete time intervals have a width increasing from the most recent time interval I₀ to the oldest time interval Iₙ₋₁.

5. Method of claim 4, wherein each time interval in the time window has a width twice of the time interval immediately following it.

6. Method of any of claims 1 to 5, wherein the computed latency represents a round trip time between the measurement point and a connection endpoint terminal (8, 12) to which the data packet is transmitted.

7. Method of any of claims 1 to 6, further comprising the step of storing (34), at time t=0 corresponding to the arrival of the data packet at the measurement point (6), the entry representative of said data packet in a temporary data structure (35).

8. Device (6) of measurement of a connection latency, comprising :
a) a dividing module (20) for dividing a window of time into a number n of successive discrete time intervals Iᵢ 0 ≤ *i* ≤ *n* - 1, and for associating to each time interval a data structure ;
b) a storage module (22) for storing, in at least one data structure CBFᵢ an entry representative of a data packet arrived at the measurement point at a time corresponding to the temporal position of the time interval Iᵢ associated to said data structure CBFᵢ; and
e) a computation module (26) for, when an acknowledgement packet corresponding to said data packet arrives at the device (6), identifying said time interval Iᵢ associated to said data structure CBFᵢ in which the entry is stored and computing the connection latency on the basis of the identified interval.

9. Device of claim 8, wherein said device is a packet processing device, particularly a router or a home gateway.

10. Device of claim 8, wherein said device is an eavesdropping device.

11. A computer-readable program comprising computer-executable instructions to enable a computer to perform the method of any one of claims 1 to 7.
